# EUROPEAN PATENT APPLICATION

(11) **EP 1 860 527 A2**
(43) Date of publication of application: **28.11.2007**
(21) Application number: 06123080.1
(22) Date of filing: 27.10.2006
(51) Int. Cl.: G06F 3/033, G06F 3/048

(54) **Omni-directional image navigator**

(30) Priority: 22.05.2006 CN 200610078294
(71) Applicant: High Tech Computer Corp., Taoyuan City, Taoyuan Hsien (TW)
(72) Inventor: Wang, John C., Taoyuan City (TW)
(74) Representative: Viering, Jentschura & Partner

(57) **Abstract**

An omni-directional image navigator is described. The omni-directional image navigator includes a first touch area and a direction control area constituted by a second touch area adjacent to the first touch area. The direction control area is utilized to move an image on a display of an electronic device. The direction control area is formed on a touch pad. Preferably, the first touch area is also formed on the touch pad. The omni-directional image navigator further includes a mechanical switch thereunder to improve the tactile feedback thereof.

## Description

### Field of the Invention

The present invention generally relates to an omni-directional image navigator. More particularly, this invention relates to an omni-directional electronic map navigator for portable electronic device.

### Background of the Invention

Since information technology and the semiconductor industry are highly developed, electronic devices are becoming increasingly light, and easy to hold. Therefore, these kinds of portable electronic devices, such as notebook computers, portable televisions, mobile phones, and personal digital assistants (PDA) are becoming thinner, lighter, shorter and smaller.

Accordingly, various application programs and hardware devices are designed to support these smaller portable electronic devices. The portable electronic devices are therefore more powerful and convenient for users to operate and execute programs thereon. Additionally, a global positioning system (GPS) combines satellite technology with wireless technology to conveniently guide users when driving and walking. Hence, GPS-enabled portable electronic devices are increasingly popular, and the potential thereof is limitless.

The GPS is operated with an exact electronic map, and users preview and operate the electronic map with suitable hardware. In general, users use a personal digital assistant touch pen and a touch panel to operate the electronic map on the display of the personal digital assistant.

However, the touch pen and the touch panel are not suitable for operating electronic maps on portable electronic devices. Users have to use one hand to hold the portable electronic device, and the other hand moves the touch pen on the touch panel. Some portable electronic devices are therefore equipped with a fixed-directional operating device to move the electronic map on the portable electronic device display. Nevertheless, users find it difficult to move the electronic map to a desired destination thereby increasing the complexity of operating the electronic map.

Accordingly, there is a need to provide a user-friendly hardware interface to conveniently and naturally operate the image on the portable electronic device.

### Summary of the Invention

It is an objective of the present invention to provide an omni-directional image navigator to conveniently move an image on a display.

It is another objective of the present invention to provide an omni-directional image navigator including a touch pad with a central area and a direction control area to operate an image on a display. The direction control area is used to move the image on the display and the central area can be used to execute or terminate a program procedure.

It is yet another objective of the present invention to provide an omni-directional image navigator including a touch pad and a mechanical switch disposed under the touch pad to enable the tactile feedback of the touch pad similar to a mechanical switch tactile feedback.

To accomplish the above objectives, the present invention provides an omni-directional image navigator including a first touch area and a second touch area. The second touch area is preferably a direction control area encircling the first touch area and moves an image on the display of an electronic device. The electronic device is, for example, a personal digital assistant (PDA), a mobile phone, a digital album, a notebook computer, a PDA mobile phone, or a PDA mobile phone with a global positioning system. The second touch area is preferably a touch pad and the first touch area can also be a touch pad.

The first touch area further includes a trackball to slowly move the image while the direction control area can move the image quickly. Oppositely, using the trackball to move the image quickly and the direction control area for slowly moving the image are within the scope of the present invention.

The omni-directional image navigator further comprises a mechanical switch, for example, a metal dome switch or a poly dome switch, disposed under the touch pad and/or the trackball. The mechanical switch is preferably under the first touch area. The image can be moved in the direction according to the touch position of the second touch area when the mechanical switch and the second touch area are both triggered. The electronic device can execute a predetermined program when the mechanical switch and the first touch area are both triggered.

Accordingly, the omni-directional image navigator according to the present invention can use the direction control area, for example, a ring-shaped direction control area, to intuitively and naturally move the image. In conjunction with the mechanical switch, the tactile feedback of the omni-directional image navigator is therefore improved. When the first touch area is equipped with a trackball, the omni-directional image navigator can utilize the trackball to slowly move the image and the direction control area to quickly move the image. Hence, users can conveniently, intuitively and omni-directionally browse the image.

### Brief Description of the Drawings

The foregoing aspects and many of the attendant advantages of this invention will be more readily appreciated as the same becomes better understood by reference to the following detailed description, when taken in conjunction with the accompanying drawings, wherein:
FIG. 1 illustrates a first preferred embodiment of the omni-directional image navigator according to the present invention;
FIG. 2 illustrates a second preferred embodiment of the omni-directional image navigator according to the present invention; and
FIG. 3 illustrates a portable electronic device equipped with the omni-directional image navigator according to the present invention.

### Detailed Description of the Preferred Embodiment

The following description is currently the best implementation of the present invention. This description is not to be taken in a limiting sense but is made merely to describe the general principles of the invention. The scope of the invention should be determined by referencing the appended claims.

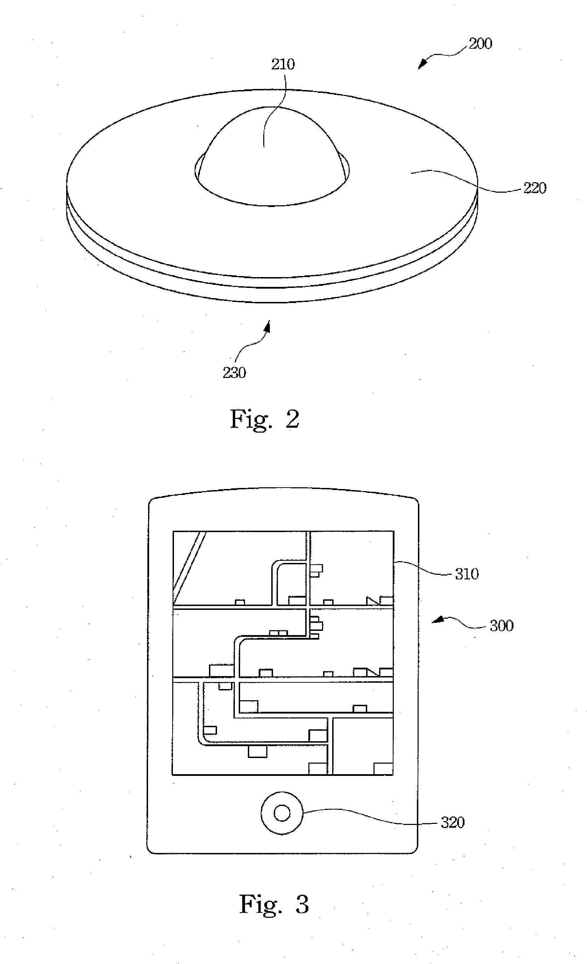

FIG. 3 illustrates a portable electronic device equipped with the omni-directional image navigator according to the present invention. The portable electronic device 300 includes a display 310 and an omni-directional image navigator 320 preferably disposed under the display 310 so that users can conveniently move the image on the display 310. The omni-directional image navigator can be disposed at any suitable place to operate the image on the electronic device. The electronic device is preferably a portable electronic device, for example, a personal digital assistant (PDA), a mobile phone, a digital album, a notebook computer, a PDA mobile phone, or a PDA mobile phone with the global positioning system.

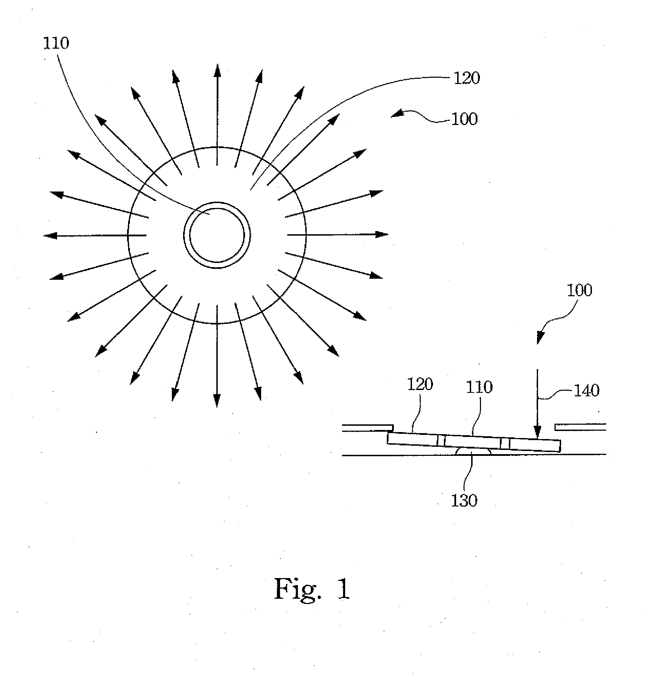

Referring to FIG. 1, a first preferred embodiment of the omni-directional image navigator according to the present invention is illustrated. The omni-directional image navigator 100 has a touch pad with at least a direction control area 120 formed on a ring-shaped region of the touch pad to control the movement of an image on the display. When a finger or any other object touches the direction control area 120 of the touch pad, the image on the display can be moved in a desired direction corresponding to the touched position on the direction control area 120 of the touch pad.

Because a conventional electronic map navigator normally provides an operating device with only few fixed directions for users to move the image on the display, users are difficult to move the electronic map to a desired destination which is not located along these few fixed directions. Therefore, the electronic map operated with conventional electronic map navigators is complicated and inconvenient. The omni-directional image navigator according to the present invention utilizes a touch pad to form a direction control area 120 so that users can easily move the electronic map to a desired destination without limitations of only being able to move the electronic map in a few fixed directions. Therefore, the omni-directional image navigator according to the present invention effectively facilitates control on the electronic map navigator allowing users to intuitively and naturally move the electronic map to their desired destination on the display.

In addition, the center of the direction control area 120 is preferably a first touch area, for example, a central area 110. The central area 110 can be, an invalid touch area to prevent the touch pad of the electronic device from moving the image on the display in an unrecognizable direction area while the user is touching thereon. Alternatively, the central area 110 of the touch pad can be a central control area to switch on or off a program procedure. Nevertheless, the first touch area can also be disposed on the other area of the touch pad. In another embodiment, the central area 110 of the touch pad can be utilized to zoom in/out the image on the display.

A mechanical switch 130, for example, a metal dome switch or a poly dome switch, is disposed under the omni-directional image navigator 100, preferably under the central area 110, to provide mechanical switch tactile feedback for the touch pad. That is to say, when the user touches and presses the touch pad along the arrow 140, his finger first comes in contact with the direction control area 120 of the touch pad, and a command or a procedure is activated when the mechanical switch 130 is also triggered. Accordingly, users can clearly feel the tactile feedback of the mechanical switch 130 to recognize his request is accepted by the omni-directional image navigator 100.

In the same manner, the central area 110 can work together with the mechanical switch 130 so that users can press the central area 110 to execute a program with clear tactile feedback. Therefore, the omni-directional image navigator 100 according to the present invention can improve the operational reliability and the accuracy of the touch pad.

Referring to FIG. 2, a second preferred embodiment of the omni-directional image navigator according to the present invention is illustrated. The omni-directional image navigator 200 includes a trackball 210 disposed in the center of the touch pad 220. However, the trackball can be disposed at any other place and is not limited to the center of the touch pad 220. The trackball 210 preferably provides a small area and slow motion for omni-directionally moving the image while the ring-shaped touch pad 220 can provide a large area and fast motion for omni-directionally moving the image. Oppositely, the trackball 210 can provides a large area and fast motion for omni-directionally moving the image while the ring-shaped touch pad 220 can provide a small area and slow motion for omni-directionally moving the image. Accordingly, users can conveniently move the image, especially an electronic map, on the display. Preferably, a mechanical switch 230 is disposed under the omni-directional image navigator 200 to further provide the mechanical switch with accurate tactile feedback for the omni-directional image navigator 200.

In addition, the user can also use the touch pad 220 and trackball 210 to zoom in/out and pan around the image. For example, the touch pad 220 can zoom in/out the image and the trackball 210 can move the image, and vice versa. In one preferred embodiment, the user can move his finger outwardly on the touch pad 220 to zoom in the image, and move his finger inwardly on the touch pad 220 to zoom out the image. In another preferred embodiment, the user can clockwise rotate the trackball 210 to zoom in the image and counterclockwise rotate the trackball 210 to zoom out the image. In further another preferred embodiment, the user can counterclockwise rotate the trackball 210 to zoom in the image and clockwise rotate the trackball 210 to zoom out the image.

The omni-directional image navigator according to the present invention can utilize the direction control area of the touch pad to control the image on the display so that users can intuitively and naturally control the motion of the image. In addition, the omni-directional image navigator can be equipped with a mechanical switch under the touch pad thereof thereby improving the tactile feedback and operational accuracy. Furthermore, a touch area can be formed in a portion of the direction control area or out of the direction control area to execute a program. A trackball can also be disposed in a portion of the direction control area or out of the direction control area to further conveniently move the image.

As is understood by a person skilled in the art, the foregoing preferred embodiments of the present invention are illustrative of the present invention rather than limiting of the present invention. It is intended that various modifications and similar arrangements be included within the spirit and scope of the appended claims, the scope of which should be accorded the broadest interpretation so as to encompass all such modifications and similar structures.

## Claims

1. An omni-directional image navigator, comprising:
a switch; and
a direction control area coupled to the switch for controlling the movement of an image on the display of a portable electronic device, and executing a predetermined command when the direction control area and the switch are both triggered.

2. The omni-directional image navigator of claim 1, wherein the predetermined command is moving the image toward a predetermined direction according to a touch position of the direction control area.

3. The omni-directional image navigator of claim 1, wherein the direction control area further comprises a touch area.

4. The omni-directional image navigator of claim 3, wherein the moving speed of the image controlled by the touch area is different from the moving speed controlled by the direction control area.

5. The omni-directional image navigator of claim 3, wherein the touch area is utilized to zoom in/out the image on the display of the portable electronic device.

6. An omni-directional image navigator, comprising:
a trackball for moving an image displayed on a display of a portable electronic device; and
a direction control area made of a touch pad, and encircling the trackball to move the image, wherein the moving speed of the image moved by the trackball is different from the moving speed of the image moved by the direction control area.

7. The omni-directional image navigator of claim 6, further comprising a mechanical switch disposed under the trackball, wherein the portable electronic device executes a predetermined program when the mechanical switch and the trackball are both triggered.

8. An omni-directional image navigator, comprising:
a first touch area; and
a second touch area adjacent to the first touch area, wherein the second touch area controls the moving direction of an image on a display of a portable electronic device, and the second touch area is made of a touch pad.

9. The omni-directional image navigator of claim 8, wherein the first touch area further comprises a trackball.

10. The omni-directional image navigator of claim 9, wherein the trackball is utilized to move the image displayed on the display, and the speed of the image moved by the trackball is different from that moved by the second touch area.

11. The omni-directional image navigator of claim 9, wherein the trackball is utilized to zoom in/out the image displayed on the display.

12. The omni-directional image navigator of claim 8, further comprising a mechanical switch, wherein the image is moved in a direction according to a touch position of the second touch area when the mechanical switch and the second touch area are both triggered.
